(19)

Europäisches
Patentamt
European
Patent Office
Office européen
des brevets

(11) **EP 4 311 066 A1**

(12) **EUROPEAN PATENT APPLICATION**
published in accordance with Art. 153(4) EPC

(43) Date of publication:
**24.01.2024 Bulletin 2024/04**

(21) Application number: **21932157.7**

(22) Date of filing: **24.03.2021**

(51) International Patent Classification (IPC):
***H02J 7/00*** (2006.01)

(52) Cooperative Patent Classification (CPC):
**H02J 7/007182; H01M 10/443; H01M 10/46;**
**H02J 7/0071; H02J 7/00714; H02J 7/007194;**
**Y02E 60/10**

(86) International application number:
**PCT/CN2021/082844**

(87) International publication number:
**WO 2022/198529 (29.09.2022 Gazette 2022/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Ningde Amperex Technology Limited**
**Ningde City, Fujian Province 352100 (CN)**

(72) Inventor: **LIU, Ao**
**Ningde City, Fujian Province 352100 (CN)**

(74) Representative: **Icosa**
**83 avenue Denfert-Rochereau**
**75014 Paris (FR)**

(54) **METHOD FOR CHARGING BATTERY, AND ELECTRICAL DEVICE AND STORAGE MEDIUM**

(57)     This application provides a battery charging method, an electric device, and a storage medium. The method is applied in the electric device and includes: charging a battery in a charging manner under a first ambient temperature T1 until a voltage of the battery reaches a first cutoff voltage U1 and/or a current of the battery reaches a first cutoff current I1, so that a first charge capacity of the battery is Q1; and charging the battery in the charging manner under a second ambient temperature T2 until the voltage of the battery reaches a second cutoff voltage U2 and/or the current of the battery reaches a second cutoff current I2, so that a second charge capacity of the battery is Q2, where T2 > T1, U2 < U1, I1 < I2, and Q1 = Q2. This application can improve performance of the battery under a high temperature.

Charging a battery in a charging manner under a first ambient temperature T1 until a voltage of the battery reaches a first cutoff voltage U1 and/or a current of the battery reaches a first cutoff current I1, so that a first charge capacity of the battery is Q1 — S20

Charging the battery in the charging manner under a second ambient temperature T2 until the voltage of the battery reaches a second cutoff voltage U2 and/or the current of the battery reaches a second cutoff current I2, so that a second charge capacity of the battery is Q2 — S21

FIG. 2

EP 4 311 066 A1

**Description**

**TECHNICAL FIELD**

This application relates to the technical field of batteries, and in particular, to a battery charging method, an electric device, and a storage medium.

**BACKGROUND**

The currently prevalent battery charging method is constant-current charging plus constant-voltage charging. That is, the battery is charged at a constant current until a specified voltage, and then charged at a constant voltage. A reason for adopting such a charging method is that polarization occurs in the battery during the charging. The higher the charge current, the more obvious the polarization of the battery. When the battery is charged at a constant current until the voltage reaches a specified value, cells of the battery are not fully charged due to the polarization. Therefore, the battery needs to be further charged at a constant voltage. Under actual working conditions, factors that affect the polarization of the battery include not only the current, but also the ambient temperature. The higher the ambient temperature, the weaker the polarization of the battery. When the above charging method is adopted, the polarization of the battery is weakened to some extent when the battery is charged at a constant current until a high temperature. However, in the process of constant-voltage charging, the potential of the positive electrode of the battery is somewhat higher than that of the battery charged under a normal temperature. Therefore, in the period of constant-voltage charging, the charge capacity of the battery is higher than the charge capacity in the period in which the battery is charged under a normal temperature, and the battery is overcharged to some extent, thereby deteriorating the degree of delithiation of the negative electrode and deteriorating the high-temperature performance of the battery.

**SUMMARY**

In view of the situation described above, it is necessary to provide a battery charging method, an electric device, and a storage medium to improve performance of a battery under a high temperature.

An embodiment of this application provides a battery charging method. The method includes: charging a battery in a charging manner under a first ambient temperature T1 until a voltage of the battery reaches a first cutoff voltage U1 and/or a current of the battery reaches a first cutoff current I1, so that a first charge capacity of the battery is Q1; and charging the battery in the charging manner under a second ambient temperature T2 until the voltage of the battery reaches a second cutoff voltage U2 and/or the current of the battery reaches a second cutoff current I2, so that a second charge capacity of the battery is Q2, where T2 > T1, U2 < U1, I1 < I2, and Q1 = Q2.

According to some embodiments this application, T1 < 35 °C, and 35 °C $\leq$ T2 $\leq$ 60 °C.

According to some embodiments this application, the second cutoff voltage U2 is greater than or equal to a reduction potential of an electrolytic solution of the battery.

According to some embodiments this application, $U_{cl}$-500 mV $\leq$ U2 < $U_{cl}$, where $U_{cl}$ is a limited charge voltage of the battery. The limited charge voltage may be understood as a system upper-limit voltage of the battery.

According to some embodiments this application, I1 < I2 $\leq$ I1 + 0.2 C.

According to some embodiments this application, the first charge capacity is a full charge capacity of the battery under T1.

According to some embodiments this application, the charging manner includes a first charging manner. The first charging manner includes N sequential charging sub-stages, where N is an integer greater than or equal to 2. The N charging sub-stages are defined as an $i^{th}$ charging sub-stage, where i = 1, 2, 3,..., N, respectively. In the $i^{th}$ charging sub-stage, the battery is charged at an $i^{th}$ current or an $i^{th}$ voltage or an $i^{th}$ power. In an $(i+1)^{th}$ charging sub-stage, the battery is charged at an $(i+1)^{th}$ current or an $(i+1)^{th}$ voltage or an $(i+1)^{th}$ power. A charge current of the battery in the $(i+1)^{th}$ charging sub-stage is less than or equal to a charge current in the $i^{th}$ charging sub-stage.

According to some embodiments this application, the $(i+1)^{th}$ voltage is greater than or equal to the $i^{th}$ voltage, and the $(i+1)^{th}$ power is less than or equal to the $i^{th}$ power.

According to some embodiments this application, the second cutoff current I2 is less than or equal to a current of the battery at time of completing the $1^{st}$ charging sub-stage.

According to some embodiments this application, the charging manner includes a second charging manner. The second charging manner includes M sequential charging sub-stages, where M is an integer greater than or equal to 2. The M charging sub-stages are defined as a $j^{th}$ charging sub-stage, where j = 1, 2,..., M, respectively. Each $j^{th}$ charging sub-stage includes a $j^{th}$ earlier charging sub-stage and a $j^{th}$ later charging sub-stage. In one of the $j^{th}$ earlier charging sub-stage or the $j^{th}$ later charging sub-stage, the battery is not charged or is charged or discharged at a $j^{th}$ earlier charge sub-current for a duration of Tj1. In the other of the $j^{th}$ earlier charging sub-stage or the $j^{th}$ later charging sub-stage, the battery is charged at a $j^{th}$ later charge sub-current for a duration of Tj2. An absolute value of the $j^{th}$ earlier charge sub-current is smaller than an absolute value of the $j^{th}$ later charge sub-current.

According to some embodiments this application, an average value of a charge current in the $(j+1)^{th}$ charging sub-stage is less than or equal to a charge current in the $j^{th}$ sub-stage.

According to some embodiments this application, the second cutoff current I2 is less than or equal to a current of the battery at time of completing the $1^{st}$ charging sub-stage.

An embodiment of this application provides an electric device. The electric device includes: a battery; and a processor. The processor is configured to perform the battery charging method described above.

An embodiment of this application provides a storage medium on which at least one computer instruction is stored. The computer instruction is loaded by a processor and used to perform the battery charging method described above.

The battery charging method according to the embodiments of this application effectively reduces the positive electrode voltage of the battery in a high temperature environment on the basis of ensuring consistency between the charge capacity of the battery charged under a high temperature and the charge capacity of the battery charged under a normal temperature, reduces a speed of reaction between a positive active material and the electrolytic solution under a high voltage in a corresponding system of the battery, and thereby improves the cycle performance and storage performance of the battery.

**BRIEF DESCRIPTION OF DRAWINGS**

FIG. 1 is a schematic diagram of an electric device according to an embodiment of this application; and
FIG. 2 is a flowchart of a battery charging method according to an embodiment of this application.

Reference numerals:

| | |
|---|---|
| Electric device | 100 |
| Memory | 11 |
| Processor | 12 |
| Battery | 13 |

This application is described in further detail below with reference to specific embodiments and the drawings.

**DETAILED DESCRIPTION OF EMBODIMENTS**

The following describes the technical solutions in the embodiments of this application clearly and thoroughly with reference to the drawings hereof. Evidently, the described embodiments are merely a part of but not all of the embodiments of this application.

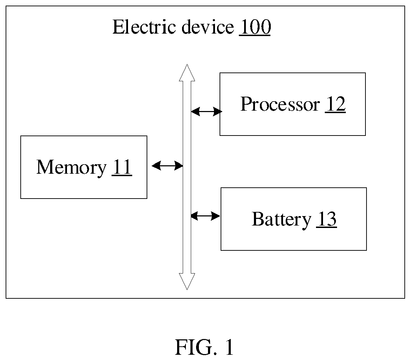

Referring to FIG. 1, FIG. 1 is a schematic diagram of an electric device according to an embodiment of this application. The electric device 100 contains, but without limitation, a memory 11, at least one processor 12, and a battery 13. Such components may be interconnected directly or by a bus.

It needs to be noted that FIG. 1 describes merely an example of the electric device 100. In other embodiments, the electric device 100 may include more or fewer components, or the configuration of the components may be different. The electric device 100 may be an electric motorcycle, an electric bicycle, an electric vehicle, a mobile phone, a tablet computer, a personal digital assistant, a personal computer, or any other rechargeable devices as appropriate.

In an embodiment, the battery 13 is a rechargeable battery configured to provide electrical energy to the electric device 100. For example, the battery 13 may be a lead-acid battery, a nickel-cadmium battery, a nickel-hydrogen battery, a lithium-ion battery, a lithium polymer battery, a lithium iron phosphate battery, or the like. The battery 13 is logically connected to the processor 12 through a battery management system (Battery Management System, BMS), so that functions such as charging and discharging are implemented through the battery management system. The battery management system may be communicationally connected to a power conversion system (Power Conversion System, PCS) through CAN or RS485. The battery 13 includes a plurality of cells. The battery may be repeatedly charged in a rechargeable manner.

In this embodiment, understandably, the electric device 100 may further include other devices, such as a pressure sensor, a light sensor, a gyroscope, a hygrometer, an infrared sensor, and the like.

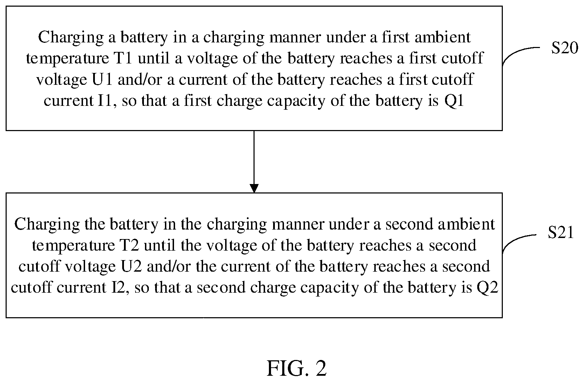

Referring to FIG. 2, FIG. 2 is a flowchart of a battery charging method according to an embodiment of this application. The battery charging method is applied to the battery. The battery charging method includes the following steps:

Step S20: Charging a battery in a charging manner under a first ambient temperature $T1$ until a voltage of the battery reaches a first cutoff voltage $U1$ and/or a current of the battery reaches a first cutoff current $I1$, so that a first charge capacity of the battery is $Q1$.

In this embodiment of this application, when the battery is charged in different charging manners, the charge cutoff voltage is decreased and/or the charge cutoff current is increased in a high temperature environment, thereby keeping consistency between the charge capacity of the battery charged under a normal temperature and the charge capacity of the battery charged under a high temperature. It needs to be noted that the charging under a normal temperature is a charging process in which the ambient temperature of the battery is less than 35 °C; and the charging under a high temperature is a charging process in which the ambient temperature of the battery is greater than or equal to 35 °C and less than or equal to 60 °C.

If the battery is charged in a charging manner under the first ambient temperature $T1$ until the voltage of the battery reaches the first cutoff voltage $U1$ and/or the current of the battery reaches the first cutoff current $I1$, the first charge capacity of the battery is calculated to be $Q1$, where $T1 < 35$ °C. The first charge capacity is a full charge capacity of the battery under $T1$. It needs to be noted that the full charge capacity is a capacity of a battery system achieved when the voltage reaches the limited charge voltage and the current reaches the charge cutoff current by charging. The limited charge voltage and the charge cutoff current may be a fixed voltage and a fixed current, respectively, related to the battery system, or may be a voltage and current, respectively, set based on customer requirements.

It needs to be noted that the battery is controlled by a battery management system to reach the first cutoff voltage $U1$ and/or the first cutoff current $I1$ by charging.

It needs to be noted that, in this embodiment, the first cutoff voltage $U1$ is equal to the limited charge voltage $U_{cl}$ of the battery or a system upper-limit voltage of the battery. In other embodiments, the first cutoff voltage $U1$ may be greater than the limited charge voltage $U_{cl}$ of the battery or the system upper-limit voltage of the battery, or may be less than the limited charge voltage $U_{cl}$ of the battery or the system upper-limit voltage of the battery. The value of the first cutoff voltage $U1$ is dependent on the charging manner. The charging manner includes a first charging manner and a second charging manner.

In this embodiment, the first charging manner includes $N$ sequential charging sub-stages, where $N$ is an integer greater than or equal to 2. The $N$ charging sub-stages are defined as an $i^{th}$ charging sub-stage, where $i = 1, 2, 3,..., N$, respectively. In the $i^{th}$ charging sub-stage, the battery is charged at an $i^{th}$ current or an $i^{th}$ voltage or an $i^{th}$ power. In an $(i+1)^{th}$ charging sub-stage, the battery is charged at an $(i+1)^{th}$ current or an $(i+1)^{th}$ voltage or an $(i+1)^{th}$ power. A charge current of the battery in the $(i+1)^{th}$ charging sub-stage is less than or equal to a charge current in the $i^{th}$ charging sub-stage.

In this embodiment, the $(i+1)^{th}$ voltage is greater than or equal to the $i^{th}$ voltage, and the $(i+1)^{th}$ power is less than or equal to the $i^{th}$ power.

In this embodiment, the second charging manner includes $M$ sequential charging sub-stages, where $M$ is an integer greater than or equal to 2. The $M$ charging sub-stages are defined as a $j^{th}$ charging sub-stage, where $j = 1, 2,..., M$, respectively. Each $j^{th}$ charging sub-stage includes a $j^{th}$ earlier charging sub-stage and a $j^{th}$ later charging sub-stage. In one of the $j^{th}$ earlier charging sub-stage or the $j^{th}$ later charging sub-stage, the battery is not charged or is charged or discharged at a $j^{th}$ earlier charge sub-current for a duration of $Tj1$. In the other of the $j^{th}$ earlier charging sub-stage or the $j^{th}$ later charging sub-stage, the battery is charged at a $j^{th}$ later charge sub-current for a duration of $Tj2$. An absolute value of the $j^{th}$ earlier charge sub-current is smaller than an absolute value of the $j^{th}$ later charge sub-current.

In this embodiment, an average value of a charge current in the $(j+1)^{th}$ charging sub-stage is less than or equal to a charge current in the $j^{th}$ sub-stage.

Step S21: Charging the battery in the charging manner under a second ambient temperature $T2$ until the voltage of the battery reaches a second cutoff voltage $U2$ and/or the current of the battery reaches a second cutoff current $I2$, so that a second charge capacity of the battery is $Q2$, where $T2 > T1$, $U2 < U1$, $I1 < I2$, and $Q1 = Q2$.

In this embodiment, the second ambient temperature $T2$ is greater than the first ambient temperature $T1$. In order to ensure that the first charge capacity $Q1$ of the battery under the first ambient temperature is equal to the second charge capacity $Q2$ of the battery under the second ambient temperature, one of the following three conditions needs to be satisfied: (i) when the battery is charged in the charging manner under the second ambient temperature until the voltage reaches the second cutoff voltage $U2$, the second cutoff voltage $U2$ is less than the first cutoff voltage $U1$; (ii) when the battery is charged in the charging manner until the current reaches the second cutoff current $I2$, the second cutoff current $I2$ is less than the first cutoff current $I1$; and (iii) when the battery is charged in the charging manner until the voltage reaches the second cutoff voltage $U2$ and the current reaches the second cutoff current $I2$, the second cutoff voltage $U2$ is less than the first cutoff voltage $U1$, and the second cutoff current $I2$ is less than the first cutoff current $I1$.

In an embodiment, $U2$ is greater than or equal to a reduction potential of an electrolytic solution of the battery.

In another embodiment, $U_{cl}$-500 mV $\leq$ U2 < $U_{cl}$.

In some embodiments, I1 < I2 $\leq$ I1 + 0.2 C. In some other embodiments, I1 + 0.05 C $\leq$ I2 $\leq$ I1 + 0.15 C. Understandably, C is a charge rate, that is, a measure of charging speed, and means a current value required for charging the battery to a rated capacity within a specified time. To be specific, charge or discharge rate = charge current/rated capacity of the battery.

In an embodiment, if the first charging manner is adopted, the second cutoff current I2 is less than or equal to the current of the battery at the time of completing the 1st charging sub-stage; or, if the second charging manner is adopted, the second cutoff current I2 is less than or equal to the current of the battery at the time of completing the 1st charging sub-stage.

An embodiment of this application discloses a charging method. By adopting the charging method according to this embodiment of this application, the battery can achieve the same charge capacity between a case of charging under a high temperature and a case of charging under a normal temperature, thereby effectively reducing the charge cutoff voltage and the positive electrode potential and increasing the high-temperature cycle life of the cells. The charging method is applicable to all lithium-ion batteries.

To make the objectives, technical solutions, and advantages of this application clearer, the following describes the battery charging method according to the present invention in more detail with reference to drawings and embodiments. Understandably, the specific embodiments described herein are merely intended to explain this application, but not intended to limit this application.

The battery system adopted in the comparative embodiments and the embodiments uses lithium cobalt oxide as a positive electrode, and uses graphite as a negative electrode. The battery system further includes a separator, an electrolytic solution, and a packaging shell. The battery system is prepared through processes such as mixing, coating, assembling, chemical formation, and aging. For some cells in a winding process, a reference electrode is added between the positive electrode and the negative electrode to make a three-electrode battery, which is configured to test the difference between the positive electrode potential and the negative electrode potential of the battery during the charging.

The positive electrode of the battery is compounded of 96.7 wt% lithium cobalt oxide $LiCoO_2$ as a positive active material, 1.7 wt% polyvinylidene difluoride (Polyvinylidene fluoride, PVDF) as a binder, and 1.6 wt% conductive carbon black (SP) as a conductive agent. The negative electrode of the battery is compounded of 98 wt% artificial graphite as a negative active material, 1.0 wt% styrene butadiene rubber (SBR) emulsion as a binder, and 1.0 wt% sodium carboxymethyl cellulose (Carboxy Methyl cellulose, CMC) as a thickener. The separator is a highly adhesive composite film.

The limited charge voltage $U_{cl}$ of the battery according to each comparative embodiment and each embodiment of this application is 4.45 V It is hereby pointed out that the charging method according to this application is applicable to batteries of various voltage systems, and is not limited to the 4.45 V system. The charging method in the prior art (charging at a constant current and a constant voltage) adopted in the comparative embodiment is compared with the charging method adopted in the embodiments of this application to compare the percentage of decrease in the positive electrode potential, the percentage of thickness expansion of the cell, and the capacity retention rate at the end of 500 cycles.

A method for calculating the percentage of decrease in the positive electrode potential includes: charging the battery at a constant current of 0.7 C under an ambient temperature of 35 °C or 60 °C until the voltage reaches 4.45 V, and then charging the battery at a constant voltage until the current reaches 0.05 C. Recording a maximum value of the positive electrode potential of the battery as a reference potential. Then testing the maximum value of the positive electrode potential by adopting different charging methods and ambient temperatures in both the comparative embodiment and the embodiment. Calculating an absolute value of a difference between the maximum value of the positive electrode potential obtained in the comparative embodiment and the maximum value of the positive electrode potential obtained in the embodiment, and dividing the absolute value by the reference potential to obtain the percentage of decrease in the positive electrode potential.

A method for calculating the capacity retention rate includes: performing 500 charge and discharge cycles on the battery by repeating a corresponding charging process under an ambient temperature of 35 °C or 60 °C in both the comparative embodiment and the embodiment, and dividing a discharge capacity of the battery at the end of the 500 charge and discharge cycles by a discharge capacity at the end of the 1st cycle to obtain the capacity retention rate.

A method for calculating the thickness expansion percentage of a cell includes: charging the battery to a full capacity in different charging manners under an ambient temperature of 35 °C or 60 °C in both the comparative embodiment and the embodiment, measuring the thickness of the battery cell, and using the thickness as an initial thickness value. Then leaving the battery to stay in a high/low temperature thermostat under an 85°C ambient temperature for 8 hours. Measuring the cell thickness of the battery at the end of the 8 hours, and dividing the difference between the cell thickness at the end of 8 hours and the initial thickness value by the initial thickness value to obtain the thickness expansion percentage of the cell. It needs to be noted that the lower the cell expansion rate, the better.

The existing charging manner in the Comparative Embodiment 1 is the constant-current and constant-voltage charging method in the prior art. A specific charging process of the existing charging manner under an ambient temperature of 35 °C and 60 °C respectively is described below. In the following charging process, neither the charge cutoff voltage of the battery during constant-current charging nor the charge cutoff current during constant-voltage charging is reduced under a high temperature condition (such as 60 °C).

Step 1: Charging the battery at a constant current of 0.7 C until the voltage reaches 4.45 V;

Step 2: Charging the battery at a constant voltage of 4.45 V until the current reaches 0.05 C;

Step 3: Letting the battery stand for 5 minutes;

Step 4: Discharging the battery at a constant current of 0.5 C until the voltage reaches 3.0 V;

Step 5: Letting the battery stand for 5 minutes;

Step 6: Repeating steps 1 to 5 to complete 500 cycles.

**Embodiment 1**

A charging process under an ambient temperature of 35 °C is as follows:

Step 1: Charging the battery at a constant current of 0.7 C until the voltage reaches 4.43 V;
Step 2: Charging the battery at a constant voltage of 4.43 V until the current reaches 0.05 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

A charging process under an ambient temperature of 60 °C (the charge cutoff voltage of the battery during constant-current charging is reduced under a high temperature condition) is as follows:

Step 1: Charging the battery at a constant current of 0.7 C until the voltage reaches 4.41 V;
Step 2: Charging the battery at a constant voltage of 4.41 V until the current reaches 0.05 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

**Embodiment 2**

A charging process under an ambient temperature of 35 °C is as follows:

Step 1: Charging the battery at a constant current of 0.7 C until the voltage reaches 4.45 V;
Step 2: Charging the battery at a constant voltage of 4.45 V until the current reaches 0.12 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

A charging process under an ambient temperature of 60 °C (the charge cutoff current of the battery during constant-voltage charging is reduced under a high temperature condition) is as follows:

Step 1: Charging the battery at a constant current of 0.7 C until the voltage reaches 4.45 V;
Step 2: Charging the battery at a constant voltage of 4.45 V until the current reaches 0.2 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

**Embodiment 3**

A charging process under an ambient temperature of 35 °C is as follows:

Step 1: Charging the battery at a constant current of 0.7 C until the voltage reaches 4.48 V;

Step 2: Charging the battery at a constant voltage of 4.48 V until the current reaches 0.11 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

A charging process under an ambient temperature of 60 °C (the charge cutoff voltage of the battery during constant-current charging is reduced under a high temperature condition) is as follows:

Step 1: Charging the battery at a constant current of 0.7 C until the voltage reaches 4.43 V;
Step 2: Charging the battery at a constant voltage of 4.43 V until the current reaches 0.11 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

**Embodiment 4**

A charging process under an ambient temperature of 35 °C is as follows:

Step 1: Charging the battery at a constant current of 0.7 C until the voltage reaches 4.5 V;
Step 2: Charging the battery at a constant voltage of 4.5 V until the current reaches 0.23 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

A charging process under an ambient temperature of 60 °C (the charge cutoff current of the battery during constant-voltage charging is increased under a high temperature condition) is as follows:

Step 1: Charging the battery at a constant current of 0.7 C until the voltage reaches 4.5 V;
Step 2: Charging the battery at a constant voltage of 4.5 V until the current reaches 0.35 C;
Step 3: Letting the battery stand for 5 minutes;
Step 4: Discharging the battery at a constant current of 0.5 C until the voltage reaches 3.0 V;
Step 5: Letting the battery stand for 5 minutes;
Step 6: Repeating steps 1 to 5 to complete 500 cycles.

**Embodiment 5**

A charging process under an ambient temperature of 35 °C is as follows:

Step 1: Charging the battery at a constant current of 0.7 C until the voltage reaches 4.4 V;
Step 2: Charging the battery at a constant voltage of 4.35 V until the current reaches 0.4 C;
Step 3: Charging the battery at a constant voltage of 4.43 V until the current reaches 0.05 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

A charging process under an ambient temperature of 60 °C (the charge cutoff voltage of the battery during constant-voltage charging is reduced under a high temperature condition) is as follows:

Step 1: Charging the battery at a constant current of 0.7 C until the voltage reaches 4.4 V;
Step 2: Charging the battery at a constant voltage of 4.35 V until the current reaches 0.4 C;
Step 3: Charging the battery at a constant voltage of 4.41 V until the current reaches 0.05 C;
Step 4: Letting the battery stand for 5 minutes;
Step 5: Discharging the battery at a constant current of 0.5 C until the voltage reaches 3.0 V;
Step 6: Letting the battery stand for 5 minutes;

Step 7: Repeating steps 1 to 6 to complete 500 cycles.

**Embodiment 6**

A charging process under an ambient temperature of 35 °C is as follows:

Step 1: Charging the battery at a constant current of 0.7 C until the voltage reaches 4.4 V;
Step 2: Charging the battery at a constant voltage of 4.35 V until the current reaches 0.4 C;
Step 3: Charging the battery at a constant voltage of 4.43 V until the current reaches 0.012 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

A charging process under an ambient temperature of 60 °C (the charge cutoff current of the battery during constant-voltage charging is increased under a high temperature condition) is as follows:

Step 1: Charging the battery at a constant current of 0.7 C until the voltage reaches 4.4 V;
Step 2: Charging the battery at a constant voltage of 4.35 V until the current reaches 0.4 C;
Step 3: Charging the battery at a constant voltage of 4.41 V until the current reaches 0.23 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

**Embodiment 7**

A charging process under an ambient temperature of 35 °C is as follows:

Step 1: Charging the battery at a constant current of 0.7 C until the voltage reaches 4.4 V;
Step 2: Charging the battery at a constant power of 7.0 W until the voltage reaches 4.43 V;
Step 3: Charging the battery at a constant power of 5.5 W until the current reaches 0.05 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

A charging process under an ambient temperature of 60 °C (the charge cutoff voltage of the battery during constant-power charging is reduced under a high temperature condition) is as follows:

Step 1: Charging the battery at a constant current of 0.7 C until the voltage reaches 4.4 V;
Step 2: Charging the battery at a constant power of 7.0 W until the voltage reaches 4.41 V;
Step 3: Charging the battery at a constant power of 5.5 W until the current reaches 0.05 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

**Embodiment 8**

A charging process under an ambient temperature of 35 °C is as follows:

Step 1: Charging the battery at a constant current of 0.7 C until the voltage reaches 4.4 V;
Step 2: Charging the battery at a constant power of 7.0 W until the voltage reaches 4.45 V;
Step 3: Charging the battery at a constant power of 5.5 W until the current reaches 0.12 C;
Step 4: Letting the battery stand for 5 minutes;
Step 5: Discharging the battery at a constant current of 0.5 C until the voltage reaches 3.0 V;
Step 6: Letting the battery stand for 5 minutes;

Step 7: Repeating steps 1 to 6 to complete 500 cycles.

A charging process under an ambient temperature of 60 °C (the charge cutoff current of the battery during constant-power charging is increased under a high temperature condition) is as follows:

Step 1: Charging the battery at a constant current of 0.7 C until the voltage reaches 4.4 V;
Step 2: Charging the battery at a constant power of 7.0 W until the voltage reaches 4.45 V;
Step 3: Charging the battery at a constant power of 5.5 W until the current reaches 0.23 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

**Embodiment 9**

A charging process under an ambient temperature of 35 °C is as follows:

Step 1: Charging the battery at a constant current of 0.7 C until the voltage reaches 4.4 V;
Step 2: Charging the battery at a constant power of 7.0 W until the voltage reaches 4.43 V;
Step 3: Charging the battery at a constant voltage of 4.43 V until the current reaches 0.05 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

A charging process under an ambient temperature of 60 °C (the charge cutoff voltage of the battery during constant-power charging is reduced under a high temperature condition) is as follows:

Step 1: Charging the battery at a constant current of 0.7 C until the voltage reaches 4.4 V;
Step 2: Charging the battery at a constant power of 7.0 W until the voltage reaches 4.41 V;
Step 3: Charging the battery at a constant voltage of 4.41 V until the current reaches 0.05 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

**Embodiment 10**

A charging process under an ambient temperature of 35 °C is as follows:

Step 1: Charging the battery at a constant current of 0.7 C until the voltage reaches 4.4 V;
Step 2: Charging the battery at a constant power of 7.0 W until the voltage reaches 4.45 V;
Step 3: Charging the battery at a constant voltage of 4.45 V until the current reaches 0.12 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

A charging process under an ambient temperature of 60 °C (the charge cutoff current of the battery during constant-voltage charging is increased under a high temperature condition) is as follows:

Step 1: Charging the battery at a constant current of 0.7 C until the voltage reaches 4.4 V;
Step 2: Charging the battery at a constant power of 7.0 W until the voltage reaches 4.45 V;
Step 3: Charging the battery at a constant voltage of 4.45 V until the current reaches 0.23 C;
Step 4: Letting the battery stand for 5 minutes;
Step 5: Discharging the battery at a constant current of 0.5 C until the voltage reaches 3.0 V;
Step 6: Letting the battery stand for 5 minutes;
Step 7: Repeating steps 1 to 6 to complete 500 cycles.

The percentage of decrease in the positive electrode potential, the capacity retention rate, and the percentage of thickness expansion of the cell are tested for the batteries in Embodiments 1 to 10 and Comparative Embodiment 1, and the test results are recorded in Table 1 below.

Table 1 Percentage of decrease in the positive electrode potential and the capacity retention rate of the battery under different ambient temperatures, and the percentage of thickness expansion of the cell under 85 °C

| Embodiment | Charging manner | | Charge capacity under 25 °C | Charge capacity under 35 °C | Percentage of decrease in positive electrode potential under 35 °C | Capacity retention rate after 500 cycles under 35 °C | Charge capacity under 60 °C | Percentage of decrease in positive electrode potential under 60 °C | Capacity retention rate after 500 cycles under 60 °C | Percentage of thickness expansion of cell stored under 85 °C high temperature for 8 hours |
|---|---|---|---|---|---|---|---|---|---|---|
| Comparative Embodiment 1 | Existing charging manner | Reducing neither limited charge voltage of cell nor charge cutoff current during constant-voltage charging under a high temperature condition | 100% | 102% | Base (0%) | 75% | 105% | Base (0%) | 53% | 32% |
| Embodiment 1 | Charging method disclosed herein | Reducing limited charge voltage of cell under a high temperature condition | 100% | 100% | 1% | 84% | 100% | 2% | 72% | 19% |
| Embodiment 2 | Charging method disclosed herein | Increasing charge cutoff current during constant-voltage charging under a high temperature condition | 100% | 100% | 1% | 86% | 100% | 2% | 68% | 22% |
| Embodiment 3 | Charging method disclosed herein | Reducing limited charge voltage of cell under a high temperature condition | 100% | 100% | 1% | 87% | 100% | 2% | 69% | 18% |

(continued)

| Embodiment | Charging manner | | Charge capacity under 25 °C | Charge capacity under 35 °C | Percentage of decrease in positive electrode potential under 35 °C | Capacity retention rate after 500 cycles under 35 °C | Charge capacity under 60 °C | Percentage of decrease in positive electrode potential under 60 °C | Capacity retention rate after 500 cycles under 60 °C | Percentage of thickness expansion of cell stored under 85 °C high temperature for 8 hours |
|---|---|---|---|---|---|---|---|---|---|---|
| Embodiment 4 | Charging method disclosed herein | Increasing charge cutoff current during constant-voltage charging under a high temperature condition | 100% | 100% | 1% | 83% | 100% | 2% | 70% | 22% |
| Embodiment 5 | Charging method disclosed herein | Reducing limited charge voltage of cell under a high temperature condition | 100% | 100% | 1% | 82% | 100% | 2% | 70% | 22% |
| Embodiment 6 | Charging method disclosed herein | Increasing charge cutoff current during constant-voltage charging under a high temperature condition | 100% | 100% | 1% | 86% | 100% | 2% | 71% | 21% |
| Embodiment 7 | Constant-power charging manner | Reducing charge cutoff voltage of cell under a high temperature condition | 100% | 100% | 1% | 82% | 100% | 2% | 72% | 24% |

(continued)

| Embodiment | Charging manner | | Charge capacity under 25 °C | Charge capacity under 35 °C | Percentage of decrease in positive electrode potential under 35 °C | Capacity retention rate after 500 cycles under 35 °C | Charge capacity under 60 °C | Percentage of decrease in positive electrode potential under 60 °C | Capacity retention rate after 500 cycles under 60 °C | Percentage of thickness expansion of cell stored under 85 °C high temperature for 8 hours |
|---|---|---|---|---|---|---|---|---|---|---|
| Embodiment 8 | Charging method disclosed herein | Increasing charge cutoff current during constant-power charging under a high temperature condition | 100% | 100% | 1% | 82% | 100% | 2% | 74% | 23% |
| Embodiment 9 | Charging method disclosed herein | Reducing charge cutoff voltage of cell under a high temperature condition | 100% | 100% | 1% | 85% | 100% | 2% | 71% | 23% |
| Embodiment 10 | Charging method disclosed herein | Increasing charge cutoff current during constant-voltage charging under a high temperature condition | 100% | 100% | 1% | 84% | 100% | 2% | 69% | 19% |

As can be seen from Comparative Embodiment 1 and Embodiments 1 to 10 in Table 1, by reducing the charge cutoff voltage and/or increasing the charge cutoff current of the battery under a high temperature environment, the charging method according to the embodiments of this application ensures consistency between the charge capacity of the battery under a high temperature and the charge capacity under a normal temperature, thereby effectively improving the capacity retention rate of the battery after cyclic charging. The capacity retention rate of the battery in 35 °C and 60 °C environments in Embodiments 1 to 10 of this application is higher than that in Comparative Example 1. The capacity retention rate in a 35 °C environment is increased by approximately 9% on average, and the capacity retention rate in a 60 °C environment is increased by approximately 18% on average. The percentage of thickness expansion of the cell is also reduced. The percentage of thickness expansion of the cell in an 85 °C environment in Embodiments 1 to 10 is lower than that in Comparative Embodiment 1, and is reduced by approximately 11% on average. That is mainly because the charging method according to the embodiments of this application effectively reduces the positive electrode voltage of the battery in a high temperature environment on the basis of ensuring consistency of capacity, reduces the speed of reaction between the positive active material and the electrolytic solution under a high voltage in a corresponding system of the battery, and thereby improves the cycle performance and storage performance of the battery.

Still referring to FIG. 1, in this embodiment, the memory 11 may be an internal memory of the electric device 100, that is, a memory built in the electric device 100. In other embodiments, the memory 11 may be an external memory of the electric device 100, that is, a memory externally connected to the electric device 100.

In some embodiments, the memory 11 is configured to store program code and various data, and access the programs and data automatically at a high speed during operation of the electric device 100.

The memory 11 may include a random access memory, and may further include a non-volatile memory, such as a hard disk, an internal memory, a plug-in hard disk, a smart media card (Smart Media Card, SMC), a secure digital (Secure Digital, SD) card, a flash card (Flash Card), at least one disk storage device, a flash memory device, or other volatile solid-state storage devices.

In an embodiment, the processor 12 may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field-Programmable Gate Array, FPGA), or another programmable logical device, a discrete gate, or a transistor logical device, a discrete hardware component, or the like. The general-purpose processor may be a microprocessor, or the processor may be any other conventional processor or the like.

The program code and various data in the memory 11, when implemented in the form of a software functional unit and sold or used as an independent product, may be stored in a computer-readable storage medium. Based on such an understanding, all or part of the processes of the method described in the foregoing embodiments, for example, the steps of the battery voltage difference update method or the charge estimation method according to this application, may be performed by relevant hardware instructed by a computer program. The computer program may be stored in a computer-readable storage medium. When executed by a processor, the computer program can perform the steps in each method embodiment described above. The computer program includes computer program code. The computer program code may be in the form of source code, object code, an executable file, or some intermediate forms, or the like. The computer-readable medium may include any entity or device capable of carrying the computer program code, record medium, USB disk, mobile hard disk, magnetic disk, optical disk, computer memory, read-only memory (ROM, Read-Only Memory), and the like.

Understandably, the division into the modules is a logical function division, and may be in other division forms in actual implementation. In addition, function modules in each embodiment of this application may be integrated into one processing unit, or each module may exist physically alone, or two or more modules may be integrated into one unit. The integrated module may be implemented in the form of hardware, or may be implemented in the form of hardware plus a software function module.

Finally, it needs to be noted that the foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and scope of the technical solutions of this application.

**Claims**

1. A battery charging method, **characterized in that** the method comprises:

charging a battery in a charging manner under a first ambient temperature T1 until a voltage of the battery reaches a first cutoff voltage U1 and/or a current of the battery reaches a first cutoff current I1, so that a first charge capacity of the battery is Q1; and

charging the battery in the charging manner under a second ambient temperature T2 until the voltage of the battery reaches a second cutoff voltage U2 and/or the current of the battery reaches a second cutoff current I2, so that a second charge capacity of the battery is Q2, wherein

$$T2 > T1,\ U2 < U1,\ I1 < I2,\ \text{and}\ Q1 = Q2.$$

2. The charging method according to claim 1, **characterized in that** T1 < 35 °C, and 35 °C $\leq$ T2 $\leq$ 60 °C.

3. The charging method according to claim 1, **characterized in that** the second cutoff voltage U2 is greater than or equal to a reduction potential of an electrolytic solution of the battery.

4. The charging method according to claim 3, **characterized in that** $U_{cl}$-500 mV $\leq$ U2 < $U_{cl}$, wherein $U_{cl}$ is a limited charge voltage of the battery.

5. The charging method according to claim 1, **characterized in that** I1 < I2 $\leq$ I1 + 0.2 C.

6. The charging method according to claim 1, **characterized in that** the first charge capacity is a full charge capacity of the battery under T1.

7. The charging method according to claim 1, **characterized in that** the charging manner comprises a first charging manner, the first charging manner comprises N sequential charging sub-stages, N is an integer greater than or equal to 2, and the N charging sub-stages are defined as an $i^{th}$ charging sub-stage, wherein i = 1, 2, 3,..., N, respectively; in the $i^{th}$ charging sub-stage, the battery is charged at an $i^{th}$ current or an $i^{th}$ voltage or an $i^{th}$ power; and, in an $(i+1)^{th}$ charging sub-stage, the battery is charged at an $(i+1)^{th}$ current or an $(i+1)^{th}$ voltage or an $(i+1)^{th}$ power, wherein a charge current of the battery in the $(i+1)^{th}$ charging sub-stage is less than or equal to a charge current in the $i^{th}$ charging sub-stage.

8. The charging method according to claim 7, **characterized in that** the $(i+1)^{th}$ voltage is greater than or equal to the $i^{th}$ voltage, and the $(i+1)^{th}$ power is less than or equal to the $i^{th}$ power.

9. The charging method according to claim 1, **characterized in that** the charging manner comprises a second charging manner, the second charging manner comprises M sequential charging sub-stages, M is an integer greater than or equal to 2, the M charging sub-stages are defined as a $j^{th}$ charging sub-stage, wherein j = 1, 2,..., M, respectively, and each $j^{th}$ charging sub-stage comprises a $j^{th}$ earlier charging sub-stage and a $j^{th}$ later charging sub-stage; in one of the $j^{th}$ earlier charging sub-stage or the $j^{th}$ later charging sub-stage, the battery is not charged or is charged or discharged at a $j^{th}$ earlier charge sub-current for a duration of Tj1; and, in the other of the $j^{th}$ earlier charging sub-stage or the $j^{th}$ later charging sub-stage, the battery is charged at a $j^{th}$ later charge sub-current for a duration of Tj2, wherein an absolute value of the $j^{th}$ earlier charge sub-current is smaller than an absolute value of the $j^{th}$ later charge sub-current.

10. The charging method according to claim 9, **characterized in that** an average value of a charge current in the $(j+1)^{th}$ charging sub-stage is less than or equal to a charge current in the $j^{th}$ sub-stage.

11. An electric device, wherein the electric device comprises:

a battery; and
a processor, configured to charge the battery by performing the charging method according to any one of claims 1 to 10.

12. A storage medium on which at least one computer instruction is stored, **characterized in that** the instruction is loaded by a processor and used to perform the charging method according to any one of claims 1 to 10.

FIG. 1

Charging a battery in a charging manner under a first ambient temperature T1 until a voltage of the battery reaches a first cutoff voltage U1 and/or a current of the battery reaches a first cutoff current I1, so that a first charge capacity of the battery is Q1 — S20

Charging the battery in the charging manner under a second ambient temperature T2 until the voltage of the battery reaches a second cutoff voltage U2 and/or the current of the battery reaches a second cutoff current I2, so that a second charge capacity of the battery is Q2 — S21

FIG. 2

## INTERNATIONAL SEARCH REPORT

| International application No. |
| --- |
| **PCT/CN2021/082844** |

**A.    CLASSIFICATION OF SUBJECT MATTER**

H02J 7/00(2006.01)i

According to International Patent Classification (IPC) or to both national classification and IPC

**B.    FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT, CNKI, CNABS, DWPI, SIPOABS: 电池, 充电, 温度, 截止电压, 截止电流, 高温, 过充, battery, charg+, high, temperature, cutoff, voltage, current

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 112236918 A (NINGDE AMPEREX TECHNOLOGY LTD. et al.) 15 January 2021 (2021-01-15) claims 1-12, and description, paragraphs 0033-0085 | 1-12 |
| Y | WO 2020062127 A1 (OPPO GUANGDONG MOBILE TELECOMMUNICATIONS CO., LTD.) 02 April 2020 (2020-04-02) description, page 9, paragraphs 4-5 | 1-12 |
| Y | CN 110098646 A (NINGDE AMPEREX TECHNOLOGY LTD.) 06 August 2019 (2019-08-06) description, paragraphs 0005-0079 | 7-10 |
| Y | CN 112106248 A (NINGDE AMPEREX TECHNOLOGY LTD.) 18 December 2020 (2020-12-18) description, paragraphs 0005-0012 | 7-10 |
| A | CN 109004694 A (NINGDE AMPEREX TECHNOLOGY LTD.) 14 December 2018 (2018-12-14) entire document | 1-12 |

☐ Further documents are listed in the continuation of Box C.   ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **21 October 2021** | **01 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/082844**

| Patent document cited in search report | | | Publication date (day/month/year) | Patent family member(s) | | | Publication date (day/month/year) |
|---|---|---|---|---|---|---|---|
| CN | 112236918 | A | 15 January 2021 | None | | | |
| WO | 2020062127 | A1 | 02 April 2020 | CN | 111406353 | A | 10 July 2020 |
| | | | | EP | 3678277 | A1 | 08 July 2020 |
| | | | | WO | 2020062127 | A9 | 14 May 2020 |
| | | | | US | 2020106286 | A1 | 02 April 2020 |
| | | | | EP | 3678277 | A4 | 30 September 2020 |
| | | | | IN | 201917049730 | A | 18 September 2020 |
| CN | 110098646 | A | 06 August 2019 | US | 2019237974 | A1 | 01 August 2019 |
| CN | 112106248 | A | 18 December 2020 | None | | | |
| CN | 109004694 | A | 14 December 2018 | None | | | |

Form PCT/ISA/210 (patent family annex) (January 2015)